# EUROPEAN PATENT SPECIFICATION

(11) **EP 0 355 962 B1**
(45) Date of publication and mention of the grant of the patent: **03.03.1993**
(21) Application number: 89306667.0
(22) Date of filing: 30.06.1989
(51) Int. Cl.: E06B 7/28, B32B 15/08

(54) **Solar energy control film**
Sonnenenergie-kontrollierender Film
Film controlant l'énergie solaire

(30) Priority: 01.07.1988 US 214692
(43) Date of publication of application: 28.02.1990
(73) Proprietor: MINNESOTA MINING AND MANUFACTURING COMPANY, St. Paul, Minnesota 55133-3427 (US)
(72) Inventor: Johnson, Irvin D. c/o Minnesota Mining and, St. Paul Minnesota 55144-1000 (US); Pluim, Arthur W.,Jr. c/o Minnesota Mining and, St. Paul Minnesota 55144-1000 (US); Gilbert, Laurence R. c/o Minnesota Mining and, St. Paul Minnesota 55144-1000 (US); Masonick, Louis F. c/o Minnesota Mining and, St. Paul Minnesota 55144-1000 (US); Robbins, William B. c/o Minnesota Mining and, St. Paul Minnesota 55144-1000 (US); Steinbruckner, Warren D. c/o Minnesota Mining and, St. Paul, Minnesota 55144-1000 (US)
(74) Representative: Baillie, Iain Cameron

(56) References cited:
- EP-A- 0 077 672
- US-A- 4 699 842
- DATABASE WPIL, No. 84-223048(36) Derwent Publication Ltd., London, GB

## Description

The present invention relates to energy control films and in particular to films which are both heat shrinkable and useful for controlling solar energy.

Solar control films of the type in which thin metal layers (less than 100 nm) applied to glass and polymer substrates have been used to modify the radiant energy transmission and are well known. U.S. Patent No. 3,290,203 to Antonson et al., describes a transparent and reflective metallized polyester film which may be installed on the interior of a window. The film reduces heat and glare, thereby making a room interior more comfortable while retaining an adequate level of illumination and leaving the clarity of objects seen through the window substantially unchanged. Palmquist, in U.S. Pat. No. 3,152,950 describes a metallized protective reflective polyester film designed to be adherently attached to metal, wood, glass and other surfaces. Metallized films also reduce the transmission of radiant energy, especially in the infrared region of the spectrum (greater than 700 nm). Examples of metals typically used are aluminum, copper, silver, stainless steel, titanium and nickel. The coated films are often used for window enhancement and other forms of radiation control or various packaging application. In packaging applications, the metal layer improves vapor barrier properties or, in some cases, reduces the problem of static electricity discharge.

Although these metal coatings can be applied directly to glass, they are also applied to polymer films which are subsequently applied to glass. The result is satisfactory for a variety of applications. However, considerable skill in application techniques and/or a great deal of time is necessary to obtain an acceptably attractive installation. In addition to the problems of application, subsequent removal of the film is difficult. Further, the film applied directly to the glass can cause breakage of the glass during hot weather.

Another product, a heat shrinkable film, can be easily applied to and removed from windows. One example is the 3M Brand Window Insulator Kit (Jorqensen, et al., U.S. Pat 4,699,842). A double sided tape is used to anchor the film to desired substrates, typically, a window frame. The film is then stretched and/or heat shrunk to a desired level of tautness. The installation procedure removes wrinkles, folding creases, and the like. However, the heat shrinkable film, as presented in this product, has limited functions in a hot environment, serving only to prevent air infiltration. The film is also quite transparent to infrared radiation, so heat may be easily gained or lost through such a film.

Heat shrinkable films are normally distinguished by a characteristic ability, upon exposure to some level of heat to shrink or, if restrained, to create shrink tension within the film. Typical films of this nature are composed of polyolefins and polyvinyl chlorides. Representative examples of shrinkable films are described in U.S. Patent Nos. 4,514,465; 4,542,075; 4,590,124; and 4,617,241. Films of this nature are commerically available and find wide use in the shrink wrap packaging industry. Many shrinkable polyolefins currently commercially available are monolayer films, including both crosslinked and uncross-linked oriented polyethylene, oriented polypropylene, and oriented ethylenepropylene copolymers. The polyvinyl chloride (PVC) shrink films are monolayer films consisting of a variety of formulations of polyvinyl chloride.

European Patent Application No. 0 077 672 discloses a selectively light transmitting or electrically conductive film having a heat shrinking property said selectively light transmitting or electrically conductive film having been prepared by forming a metal layer on a biaxially oriented polyethylene terephthalate heat shrinkable film.

Deposition of a metal layer on a polymeric film typically involves passing the film through a vacuum chamber while either sputtering or evaporating the metal to be deposited. One would normally expect that the heat necessary for evaporating a metal and depositing it on a heat shrinkable polymer film would cause unacceptable film shrinkage.

The present invention is an energy control film comprising a polyolefin or a polyolefin copolymer layer which not only is heat shrinkable and but also limits transmission of radiant energy. In addition, the energy control film is easy to install on fenestrations by heat shrinking. When installed, the film provides a metallized film with energy control properties which might be obtained by adhering polymer film directly to glass. The film may be applied so as to provide a dead air space with insulation benefits, as well as reducing air and humidity infiltration. Alternatively, the film can be applied directly to glass (in lieu of a window frame) by using a double-sided tape and the stretching/heat shrinking installation technique. A variety of metals may be applied such as silver, copper, gold, aluminum alloys, tin, nichrome, stainless steel and titanium.

Figure 1 is a fragmented sectional view of an embodiment of an energy control film of the present invention.

Figure 2 is a cross section of a window insulated with the energy control film of the present invention.

The energy control film of the present invention includes a polyolefin or a polyolefin copolymer heat-shrinkable layer having a first surface and a second surface, and a metallic layer adhering to the first surface of the film, wherein the metallic layer remains substantially smooth and adherent when the film is shrunk by heat.

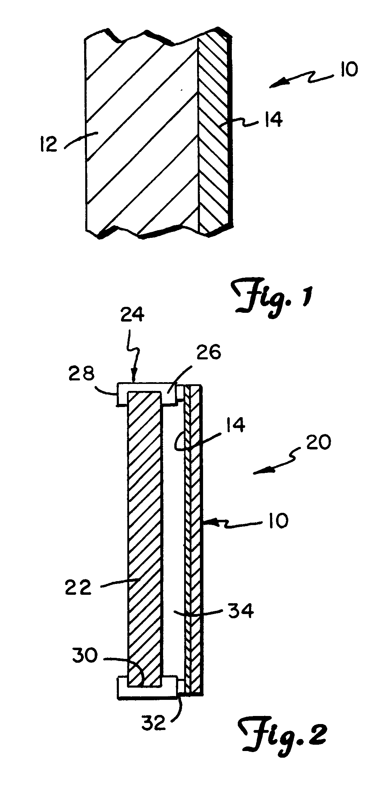

An energy control film of the present invention is generally shown at 10 in Figure 1. The film 10 includes a polymeric film 12 of heat shrinkable material and a layer of metallic material.

An insulated window is generally shown at 20 in Figure 2. The window 20 includes a pare 22, typically formed of glass. The pane 22 is held by a frame 24. The frame 24 has an interior flange 26 and an exterior flange 28 which enclose a perimeter 30 of the pane 22. Double sided tape 32 secures the energy control film 10 to the interior flange 26 of the frame 24. The tape 32 effectively seals the film 10 to the frame 24 to enclose a portion of "dead" or trapped air 34, which insulates the window 20 from heat conducted through the pane 22. Metallic layer 14 limits the transmission of light through the window. In one embodiment, the metallic layer 14 limits both visible and infrared radiation to about 50% transmission. In another embodiment, infrared radiation is selectively limited to a greater degree than visible light.

The sheet material of this invention is a transparent, flexible, heat shrinkable polymeric film comprising a polyolefin or a polyolefin copolymer layer.

Preferably, the film is also stretchable and elastomeric. In a preferred embodiment, the polymeric material comprises a polyolefin. The polyolefin material is preferably a copolymer of polyethylene and ethylvinyl acetate.

The sheet material is coated with a thin metallic layer. The metallic layer serves to limit or inhibit the transmission of electromagnetic radiation. In one embodiment, the transmission of infrared radiation is selectively limited. Preferably, the metallic layer is sufficiently dense to prevent or limit transmission of undesirable electromagnetic radiation, especially infrared radiation (greater than 700 nm) through the film, yet not so dense that a desirable level of visible radiation is prevented from passing through the film. A metallized coating layer of silver, about 15 nm, is sufficient to provide approximately 65% transmission at 550 nm. When the transmission through the film of light at 550 nm is equal to or greater than about 75%, reduction of infrared transmission is generally insufficient. When the transmission through the film of light at 550 nm is equal to or less than about 40%, visible radiation is reduced and a strong visible light mirror effect is introduced.

Although a number of metals such as aluminum alloys, tin, gold, chrome, silver, copper, nichrome, titanium and stainless steel may be coated on polymeric substrates, we have found that silver is preferred for applications involving reduction of infrared transmission. Silver has been coated on a variety of heat shrinkable webs such as polyethylene, polypropylene and copolymers of polyethylene and ethylene vinyl acetate. Adhesion of these metal coatings varies from substrate to substrate, polyester providing the strongest adherence, and polyolefin providing less strong, yet acceptable adherence. However, adhesion on all permitted substrates is adequate for use with fenestrations.

A cover layer may be coated on the metal film if necessary to provide protection against scratching or corrosion of the metal film. For example, dielectrics such as silicon oxide, aluminum oxide and the like may be subsequently applied to the metallic layer.

While not wishing to be bound by theory, it is believed that the metallizing of heat shrinkable films may be explained as follows for the case of evaporated metal films: during metallizing, a major source of heat is from infrared (IR) radiation. The IR heat originates from the metallizing source, as well as secondary radiation from other objects in the crating chamber. The heat of condensation of metal onto the polymer substrate is inadequate or insufficient to shrink the film alone. The heat of vaporization is virtually proportioned to the amount of metal deposited. The heat associated with metallizing is supplied by the aforementioned radiation and the heat of condensation. Thus, application of a metal layer can be accomplished if exposure to IR is limited, such that the film does not shrink excessively.

The importance of IR radiation was determined from the response of a wide web of film during vacuum coating. A vacuum coater was loaded with a heat shrinkable polyester web, approximately 133.4 centimeters wide and 19 micrometer thick. The coater was evacuated to nominal pressure and power was applied to a silver evaporation source. Some film shrinkage (10%) was observed even before the shutters, which control silver escape from the source, were opened. As the metallizing source was brought up to a steady power level, the web was run at a nominal speed approximately 305 meters per minutes, but upon opening the shutters, the film underwent severe shrinkage (i.e. to about 40-50% of original web width). However, as web speed was increased to about 914 meters per minute, the film shrinkage decreased until it was no longer observable. If power to the metallizing source was increased, a metal layer could be deposited to form a metallized film with a desirable level of transmission (i.e. 35-90% transmission at 550 nm), without substantial film shrinkage (less than about 1% of web width).

The role of infrared radiation in film shrinkage in the coater is further confirmed by the behavior of a polyolefin heat-shrinkable film, which characteristically demonstrates shrink temperature initiation about 5-20 degrees C lower than that of a polyester film. Thus, one would expect that polyolefin heat-shrinkable films would be more difficult to metallize. It was discovered, however, that the polyolefin film was actually more tractable (i.e., less subject to shrinkage) in the coater than polyester film, e.g, could be run at much slower speeds to achieve dense coatings at lower power setting. The fact that polyolefins are less absorbent of IR than polyester supports the theory that the IR heat of the metallizing process is the primary source of heat responsible for heat shrinkage rather than heat of condensation of the deposited metal. Thus, by either manipulating a polymer film in such a way as to minimize exposure to IR radiation or selecting polymers which absorb a minimum of radiation, heat shrinkable films can be metallized in a thermal environment without unacceptable shrinkage.

Deposition may be by electron beam inductive, or resistance evaporation methods. Alternatively, deposition of suitable metallic layers may be accomplished by sputtering with a flC magnetron sputtering unit using an argon atomsphere. Both methods are well known methods of metallizing non-heat skrink films.

The heat shrinkable energy control film of this invention is particularly useful for insulating fenestrations. For example, the film may be secured to a frame of a window by previously installed double sided adhesive tape, such as that described by Jorqensen in U.S. Patent No. 4,699,842, The film, as secured to the frame, may be stretched slightly as it is placed in contact with the adhesive to form a smooth, taut, surface. Any minor wrinkles may be removed by heating the film with a heat gun or hair dryer since heating causes the film to shrink or contract in two dimensions. Surprisingly, the shrinking or stretching of the film does not alter the appearance of the metallic layer. The installed, taut, film has a metallic layer which appears substantially smooth. By "substantially smooth" is meant that the layer appears smooth under normal visual inspection. Dark spots or streaks are not observed in the film after installation on a window and the film allows viewing of the outdoors from inside a room with negligible distinction of the film.

The film when installed on a frame around the perimeter of a window pane creates a sealed enclosure defined by the frame, the pane and film in a spaced apart relationship to the pane. The enclosure includes "dead" or trapped air which insulates the window and prevents infiltration of hot or cold exterior air. Additionally, the metallic layer of the film controls the transmission of radiant energy through the window. In the case of a stainless steel layer the control is relatively independent of wavelength, with visible and infrared transmission being similarly controlled or limited. In the case of a silver layer, the infrared and visible light transmission are selectively controlled. In the case of a heat shrink film of polyolefin, the infrared transparency of the polymer allows the metallic layer to be either inside or outside the sealed enclosure. Preferably, however, the metallic layer is placed within the enclosure, to prevent abrasion and scratching of the layer during cleaning of the film.

The film may also be installed on a glass pane without use of a glass frame. In this method of installation, double sided tape is first applied to the glass. Next, the film is secured to the double sided tape. Finally, the film is shrunk to form a taut, substantially smooth surface upon the glass pane. Although the "dead' air space is extremely thin in this method of installation, the film forms a highly effective radiation barrier which is easily installed. This method of installation may be employed to retro-fit existing windows and retain the capacity of window sections to slide past one another.

Although many embodiments may be practiced in accordance with this invention, the invention is demonstrated by the following illustrative but nonlimiting examples.

### Comparative Example I

A roll of 0.019 mm (0.75 mil) heat skrink polyester film, obtained from the Specialty Film Division of the 3M Company, Sr Paul, MN, was placed in a Balzer sputtering unit (available from Balzer Company of West Germany) and coated with approximately 20 nm of stainless steel alloy #316 which gave a transmission value of 40% (measured at 550 nm). The coating was uniform, without streaks, and had a sheet resistance of 400-1500 ohms per square. The measurement of sheet resistance is both a qualitative and quantitative measurement of the metallized layer's coating continuity. The measurement is made with either a Four Bar Contact method or a non-contact method using a Delcon instrument. The metallic coating exhibited no change in appearance, resistance values, or spectral response after exposure to sulfur vapors for five days at 75° C. Portions of the film were attached to window frames with double sided tape and shrunk by heating with a hair dryer to a taut appearance. No optical imperfections were noted after shrinking and the sheet resistance values remained constant.

### EXAMPLE 2

A roll of heat shrinkable polyolefin film approximately 0.019 mm (0.75 mils) thick, and approximately 133.35 cm (52.5 inches) wide available from the Cryovac Division, W.R. Grace, of Duncan, SC was vapor coated with silver in a conventional vacuum coater under evaporative conditions. The metallic silver layer was coated at different transmission values from about 35-70%. After coating, the film was about 132.80 cm wide, indicating minimal shrinkage. Coating uniformity across the web was very good as indicated by densitometric readings. The film was applied to windows, and heat shrunk, giving a satisfactory appearance and degree of tautness.

Another embodiment, a heat shrinkable energy control film having a metallic layer providing a 40% or less transmission at 550 nm, is useful for packaging purposes. This embodiment forms shrink wrap packages which shield electronic components from static electric shocks. Additionally, this embodiment may be used to form shrink wrap packages which are highly impermeable to liquids and gases and which shield packaged contents from visible light or other forms of electromagnetic radiation.

### EXAMPLE 3

A roll of stretchable heat shrinkable polyolefin film, approximately 0.023 mm thick and approximately 133.35 cm web width, from the Cryovac Division of W.R. Grace, was sputter coated with type 316 nonmagnetic stainless steel using a D.C. magnetron sputtering coater. By varying the web speed and power, metal layers were deposited with thickness from about 6 nm to about 17 nm in thickness. The metallized films transmitted from about 70% of 633 nm wavelength light for the 6 nm layer to about 34% for the 17 nm layer. The 6 nm film shrink about 3% during sputtering. The 17 nm film shrink about 6% during sputtering. Film transmitting about 50% to 66% of 633 nm light (i.e., approximately 12 nm to 8 nm in thickness respectively, as measured on an ellipsometer) was preferred for insulating windows. Resistance of the 50% transmission film was about 500 ohms per square. Resistance of the 66% transmission film was about 1000 ohms per square, which corresponds to a volume resistivity of the metallic layer of about 800 microohm cm. The volume resistivity of the metalic layer is believed indicative of void spaces within the layer, Sondheimer scattering, and oxidation of the metallized layer, concurrent or subsequent to deposition, since type 316 stainless steel has a bulk resistivity of about 100 micro ohm-cm.

Portions of the stainless steel metallized film were attached to window frames with double sided tape and shrunk by heating with a hair dryer to a taut appearance. After shrinking, the film appeared uniform in optical density.

Although the present invention has been described with reference to preferred embodiments, workers skilled in the art will recognize that changes may be made in form and detail without departing from the spirit and scope of the invention.

## Claims

1. An energy control film (10) comprising:
a heat-shrinkable layer (12) having a first surface and a second surface; and
a metallic layer (14) adhering to the first surface of the heat shrinkable layer (12) characterized in that said heat shrinkable layer (12) is a polyolefin or polyolefin copolymer heat shrinkable layer wherein the metallic layer (14) remains substantially smooth and adherent when the film is shrunk by heat.

2. The energy control film (10) of claim 1 wherein the metallic layer (14) is comprised of silver, copper, aluminum, iron, titanium, nickel, tin, stainless steel, gold, chrome or alloys thereof.

3. The energy control film of claim 1 wherein the heat-shrinkable layer (12) is a compliant elastomer of polyolefin and the metallic layer (14) is silver.

4. The energy control film of claim 1 wherein the heat-shrinkable layer (12) is a compliant elastomer of polyolefin and the metallic layer (14) is stainless steel.

5. A method of insulating a fenestration (20), having a pane (22) and a frame (24) surrounding the perimeter of the pane, with the film (10) of any preceding claim, the method comprising the steps of:
securing the energy control film (10) to the frame (24) to form a substantially sealed enclosure, the enclosure defined by the pane (22), the film (10) and the frame (24);
shrinking the film (10) to form a smooth, taut, wrinkle-free surface in a spaced apart relationship from the pane (22).

6. The method of claim 5 wherein the shrinking step involves applying heat to the film.

7. The method of any one of claims 5 and 6 wherein the film (10) is secured to the frame (24) by a layer of double sided adhesive tape (32).

8. A method of insulating a fenestration (20), having a pane (22) and a frame (24) surrounding the perimeter of the pane (22), with the energy control film (10) of any one of claims 1 to 4, the method comprising the steps:
stretching the energy control film (10) to a smooth, taut, wrinkle free surface in a spaced apart relationship from the pane (22); and
securing the stretched film (10) to the frame (24) to form a substantially sealed enclosure, the enclosure defined by the pane (22), the frame (24) and the smooth, taut, wrinkle free surface of the film (10).

## Patentansprüche

1. Energiesteuernde Folie (10), umfassend:
eine Schrumpfschicht (12) mit einer ersten Oberfläche und einer zweiten Oberfläche; und
eine Metallschicht (14), die auf der ersten Oberfläche der Schrumpfschicht (12) haftet, dadurch gekennzeichnet, daß die Schrumpfschicht (12) eine Schrumpfschicht aus einem Polyolefin oder einem Polyolefin-Copolymer ist, wobei die Metallschicht (14) im wesentlichen glatt und festhaftend bleibt, wenn die Folie mittels Wärme aufgeschrumpft wird.

2. Energiesteuernde Folie (10) nach Anspruch 1, dadurch gekennzeichnet, daß die Metallschicht (14) aus Silber, Kupfer, Aluminium, Eisen, Titan, Nickel, Zinn, nichtrostendem Stahl, Gold, Chrom oder Legierungen derselben besteht.

3. Energiesteuernde Folie nach Anspruch 1, dadurch gekennzeichnet, daß die Schrumpfschicht (12) ein nachgiebiges Elastomer von Polyolefin ist, und die Metallschicht (14) Silber ist.

4. Energiesteuernde Folie nach Anspruch 1, dadurch gekennzeichnet, daß die Schrumpfschicht (12) ein nachgiebiges Elastomer von Polyolefin ist, und die Metallschicht (14) nichtrostender Stahl ist.

5. Verfahren zum Isolieren einer Fensteranordnung (20) bestehend aus einer Scheibe (22) und einem Rahmen (24), der die Scheibe an ihrem Umfang umgibt, mit der Folie (10) nach einem der vorhergehenden Ansprüche, wobei das Verfahren die folgenden Schritte umfaßt:
Befestigen der energiesteuernden Folie (10) an dem Rahmen (24), um eine im wesentlichen dichte Umhüllung zu bilden, wobei die Umhüllung durch die Scheibe (22), die Folie (10) und den Rahmen (24) gebildet wird;
Aufschrumpfen der Folie (10), so daß eine glatte, gespannte, faltenfreie Oberfläche im Abstand von der Scheibe (22) entsteht.

6. Verfahren nach Anspruch 5, dadurch gekennzeichnet, daß bei dem Aufschrumpfen die Folie mit Hitze beaufschlagt wird.

7. Verfahren nach einem der Ansprüche 5 und 6, dadurch gekennzeichnet, daß die Folie (10) an dem Rahmen (24) durch eine Lage eines doppelseitigen Klebebandes (32) befestigt ist.

8. Verfahren zum Isolieren einer Fensteranordnung (20) bestehend aus einer Scheibe (22) und einem Rahmen (24), der die Scheibe an ihrem Umfang umgibt, mit der energiesteuernden Folie (10) nach einem der Ansprüche 1 bis 4, wobei das Verfahren die folgenden Schritte umfaßt:
Strecken der energiesteuernden Folie (10) zu einer glatten, gespannten, faltenfreien Oberfläche im Abstand von der Scheibe (22); und
Befestigen der gestreckten Folie (10) an dem Rahmen (24), um eine im wesentlichen dichte Umhüllung zu bilden, wobei die Umhüllung durch die Scheibe (22), den Rahmen (24) und die glatte, gespannte, faltenfreie Oberfläche der Folie (10) gebildet wird.

## Revendications

1. Film de contrôle d'énergie (10) comprenant:
une couche thermorétractable (12) ayant une première surface et une deuxième surface; et
une couche métallique (14) adhérant à la première surface de la couche thermorétractable (12), caractérisé en ce que ladite couche thermorétractable (12) est une couche thermorétractable de polyoléfine ou de copolymère de polyoléfine dans laquelle la couche métallique (14) reste essentiellement lisse et adhérente lorsque le film est rétracté par la chaleur.

2. Film de contrôle de l'énergie (10) selon la revendication 1, dans lequel la couche métallique (14) est constituée d'argent, de cuivre, d'aluminium, de fer, de titane, de nickel, d'étain, d'acier inoxydable, d'or, de chrome ou de leurs alliages.

3. Film de contrôle de l'énergie selon la revendication 1, dans lequel la couche thermorétractable (12) est un élastomère approprié de polyoléfine et dans lequel la couche métallique (14) est de l'argent.

4. Film de contrôle de l'énergie selon la revendication 1, dans lequel la couche thermorétractable (12) est un élastomère approprié de polyoléfine et dans lequel la couche métallique (14) est de l'acier inoxydable.

5. Procédé d'isolation d'une fenêtre (20) ayant une vitre (22) et un châssis (24) entourant le périmètre de la vitre avec le film (10) selon l'une quelconque des revendications précédentes, le procédé comprenant les étapes suivantes :
fixation du film de contrôle de l'énergie (10) au châssis (24) pour former une enceinte essentiellement hermétique, l'enceinte étant définie par la vitre (22), le film (10) et le châssis (24);
rétraction du film (10) pour former une surface lisse rigide et sans défaut, écartée de la vitre (22).

6. Procédé selon la revendication 5, dans lequel l'étape de la rétraction comprend l'application de chaleur au film.

7. Procédé selon l'une quelconque des revendications 5 et 6, dans lequel le film (10) est fixé au châssis (24) par une couche de ruban adhésif double face (32).

8. Procédé d'isolation d'une fenêtre (20) ayant une vitre (22) et un châssis (24) entourant le périmètre de la fenêtre (22), et un châssis (24) entourant le périmètre de la vitre (22) avec le film de contrôle de l'énergie (10) selon l'une quelconque des revendications 1 à 4, le procédé comprenant les étapes suivantes :
étirage du film de contrôle de l'énergie (10) pour obtenir une surface lisse rigide et sans défaut écartée de la vitre (22); et
fixation du film étiré (10) sur le châssis (24) pour former une enceinte essentiellement hermétique, l'enceinte étant définie par la vitre (22), le châssis (24) et la surface lisse rigide et essentiellement sans défaut du film (10).
